# EUROPÄISCHE PATENTANMELDUNG

(11) **EP 3 081 420 A1**
(43) Veröffentlichungstag der Anmeldung: **19.10.2016**
(21) Anmeldenummer: 16163245.0
(22) Anmeldetag: 31.03.2016
(51) Int. Cl.: B60K 11/04, B60K 11/08

(54) **KRAFTFAHRZEUG MIT EINER KÜHLERANORDNUNG**

(30) Priorität: 13.04.2015 DE 102015206549
(71) Anmelder: Mahle International GmbH, 70376 Stuttgart (DE)
(72) Erfinder: BRÜMMER, Richard, 70499 Stuttgart (DE); GRIESHEIMER, Peter, 70596 Stuttgart (DE); KLEBER, Andreas, 71672 Marbach (DE); KURZ, Volker, 70499 Stuttgart (DE); ASCHERMANN, Uwe, 76199 Karlsruhe (DE)
(74) Vertreter: BRP Renaud & Partner mbB Rechtsanwälte Patentanwälte Steuerberater

(57) **Zusammenfassung**

Die Erfindung betrifft ein Kraftfahrzeug (2) mit einer Kühleranordnung (3), die einen Kühlergrill (4) mit einem Kühllufteinlass (5) und einen in Fahrtrichtung (6) gesehen hinter dem Kühllufteinlass (5) angeordneten Kühler (7) aufweist sowie eine Strömungsleiteinrichtung (8), die einen Kühlluftstrom vom Kühllufteinlass (5) zum Kühler (7) leitet. Erfindungswesentlich ist dabei,
- dass das Kraftfahrzeug (2) als Nutzfahrzeug (1) ausgebildet ist,
- dass die Strömungsleiteinrichtung (8)
- kühlergrillseitige Leitelemente (9) und kühlerseitige Leitelemente (10) aufweist, die sich in montiertem Zustand überlappen, oder
- einen kühlergrillseitig oder kühlerseitig angeordneten Faltenbalg (12) oder elastischen Rahmen aufweist, welcher bei montiertem Kühler (7) ausgezogen und am gegenüberliegenden Kühler (7) oder am Kühlergrill (4) fixiert ist, oder
- zumindest eine Schiene (13) mit Führungsnut, insbesondere eine Kederschiene, und zumindest ein darin geführtes Leitelement (14) aufweist.

## Beschreibung

Die vorliegende Erfindung betrifft ein Kraftfahrzeug mit einer Kühleranordnung, die einen Kühlergrill mit einem Kühllufteinlass und einen in Fahrtrichtung gesehen hinter dem Kühllufteinlass angeordneten Kühler aufweist, gemäß dem Oberbegriff des Anspruchs 1.

Aus der DE 10 2010 048 642 A1 ist ein gattungsgemäßes Kraftfahrzeug mit einer Kühleranordnung bekannt, die einen Kühlergrill mit einem Kühllufteinlass und einen in Fahrtrichtung gesehen hinter dem Kühllufteinlass angeordneten Kühler besitzt. Darüber hinaus ist eine Strömungsleiteinrichtung vorgesehen, die einen Kühlluftstrom vom Kühllufteinlass zum Kühler leitet. Diese Strömungsleiteinrichtung bildet dabei einen außenumfangsseitig geschlossenen Luftkanal, der insbesondere verhindern soll, dass erwärmte Kühlluft, welche bereits durch den Kühler geströmt ist und wieder in Richtung des Kühllufteinlasses zurückströmt, erneut in einen Zustrombereich des Kühlers gelangt. Hierdurch soll eine verbesserte Kühlleistung erreicht werden.

Generell kann der Luftmassenstrom durch den Kühler eines Kraftfahrzeuges durch einen Lüfter oder auch durch den Staudruck des fahrenden Kraftfahrzeugs erzeugt werden. Befinden sich jedoch zwischen dem Kühler und einem kühlergrillseitigen Kühllufteinlass am Kraftfahrzeug Spalte, so kann eine unerwünschte Bypassströmung entstehen, die den Kühler umgeht und dadurch die Kühlleistung desselben verringert. Daneben kann insbesondere bei einem stehenden Kraftfahrzeug aufgrund des Lüfterbetriebs auf dessen Abströmseite ein hoher Druck entstehen, der dafür sorgt, dass durch Spalte zwischen dem Kühler und dem Kühlergrill eine Rezirkulationsströmung entsteht, die erwärmte Kühlluft erneut dem Kühler zuführt und dadurch ebenfalls dessen Kühlleistung reduziert.

Die aus dem Stand der Technik bekannte Strömungsleiteinrichtung ist dabei ausschließlich für den Einsatz bei einem Personenkraftwagen geeignet und in einem Nutzfahrzeug aufgrund dessen spezieller Einbaugeometrie nicht anwendbar.

Die vorliegende Erfindung beschäftigt sich daher mit dem Problem, für ein Kraftfahrzeug der gattungsgemäßen Art eine verbesserte oder zumindest eine alternative Ausführungsform anzugeben, welche sich insbesondere durch eine gesteigerte Kühlleistung bei einem als Nutzfahrzeug ausgebildeten Kraftfahrzeug auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, erstmalig das an sich aus dem Bereich der Personenkraftwagen bekannte Prinzip einer Abdichtung zwischen einem Kühlergrill und einem Fahrtrichtung dahinter angeordneten Kühler auf ein Nutzfahrzeug zu übertragen und dabei gleichzeitig die besondere Einbausituation bei Nutzfahrzeugen durch eine spezielle Ausgestaltung der Strömungsleiteinrichtung zu berücksichtigen. Das erfindungsgemäß als Nutzfahrzeug ausgebildete Kraftfahrzeug weist dabei eine Kühleranordnung mit einem Kühlergrill und einem Kühllufteinlass sowie einem in Fahrtrichtung gesehen hinter dem Kühllufteinlass angeordneten Kühler auf, ebenso wie zuvor erwähnte Strömungsleiteinrichtung, die einen Kühlluftstrom vom Kühllufteinlass zum Kühler leitet. Um nun die Strömungsleiteinrichtung an die speziellen Verhältnisse eines Nutzfahrzeuges adaptieren zu können, weist diese alternativ kühlergrillseitige Leitelement und kühlerseitige Leitelemente auf, die sich in montiertem Zustand überlappen, oder einen kühlergrillseitig oder kühlerseitig angeordneten Faltenbalg oder elastischen Rahmen, der bei montiertem Kühlergrill ausgezogen und am gegenüberliegenden Kühler bzw. Kühlergrill fixiert ist, oder zumindest eine Schiene mit Führungsnut, insbesondere eine Kederschiene, und zumindest ein darin geführtes Leitelement, worüber ebenfalls eine kanalartige Strömung zwischen dem Kühllufteinlas und dem Kühler erzwungen und dadurch die Kühlleistung des Kühlers deutlich verbessert werden kann, da insbesondere sogenannte Spaltverluste oder eine unerwünschte Bypassströmung ebenso vermieden werden kann, wie beispielsweise ein Rezirkulation von den Kühler bereits durchströmter Kühlluft. Die drei Alternativen stellen dabei jeweilige Ausführungsformen dar, die speziell auf die Einbausituation bei Nutzfahrzeugen ausgerichtet sind und dadurch in bislang völlig unbekannter Weise bei einem Nutzfahrzeug eingesetzt werden können.

Bei Nutzfahrzeugen verwendet man üblicherweise sogenannte "Viskolüfter", die fest an einer Brennkraftmaschine montiert sind. Der Viskolüfter muss vor dem eigentlichen Kühler bereits montiert werden, weil er nach dessen Montage nicht mehr erreichbar ist. Nach vorne ist der Bauraum durch den Kühlergrill begrenzt. Daher kann der Kühler nur von oben oder von unten in das Nutzfahrzeug eingebaut werden. Der zur Verfügung stehende Bauraum ist dabei begrenzt, so dass der Kühler nicht nennenswert nach vorne in Hohlräume im Kühlergrill geschoben werden kann, ohne dass man bei der Montage am Lüfter hängen bleiben würde. Normalerweise wird bei der Montage der Kühler nach dem Ablassen in das Nutzfahrzeug sogar etwas zurückgeschoben, um eine Überlappung des Lüfters in die Einlaufdüse hinein gewährleisten zu können. Sämtliche drei alternativen Ausführungsformen der erfindungsgemäßen Lösung erlauben dabei eine Montage des Kühlers in den doch vergleichsweise engen Bauraum, das heißt entweder von unten oder von oben und verhindern trotzdem die die Kühlleistung reduzierende und daher unbedingt zu vermeidende Bypassströmung.

Bei einer vorteilhaften Weiterbildung der erfindungsgemäßen Lösung gemäß der ersten Alternative, bei welcher die Strömungsleiteinrichtung kühlerseitige Leitelemente und kühlergrillseitige Leitelemente aufweist, die sich in montiertem Zustand überlappen, sind die kühlergrillseitigen und die kühlerseitigen Leitelemente V-förmig angeordnet und bilden dadurch gleichzeitig eine Führung zum Einschieben des Kühlers. Die V-Form kann sich dabei entweder nach unten oder aber auch nach oben erweitern, je nach dem in welche Richtung der Kühler in den Bauraum eingeschoben werden soll. Öffnet sie sich nach unten, so liegt das kühlergrillseitige Leitelement innerhalb des kühlerseitigen Leitelements, um ein Ineinandergreifen in der Art eines Trichters gewährleisten zu können. Öffnet sich die V-Form hingegen nach oben, so sind bei der Montage des Kühlers von oben die kühlerseitigen Leitelemente innerhalb der kühlergrillseitigen Leitelemente angeordnet. Dabei können selbstverständlich nicht nur seitliche Leitelemente vorgesehen werden, sondern selbstverständlich auch unten und oben angeordnete, um nach Möglichkeit nach Abschluss der Montage einen vorzugsweise vollständig geschlossenen Kühlkanal herstellen zu können. Selbstverständlich können dabei einzelne Stellen auch freigelassen werden, um beispielsweise Durchführungen oder auskragende Teile des Kühlers nicht zu behindern.

Bei einer vorteilhaften Weiterbildung der erfindungsgemäßen Lösung gemäß der ersten Alternative sind die kühlergrillseitigen Leitelemente fest am Kühlergrill angeordnet, insbesondere sogar einstückig mit diesem ausgebildet, und/oder die kühlerseitigen Leitelemente sind fest am Kühler angeordnet, insbesondere sogar einstückig mit diesem ausgebildet. Hierdurch kann die Fertigung der kühlergrillseitigen und/oder der kühlerseitigen Leitelemente deutlich kostengünstiger gestaltet werden, da diese beispielsweise in einem gemeinsamen Verfahrensschritt mit dem Kühlergrill bzw. dem Kühler hergestellt bzw. gefertigt werden können. Alternativ hierzu ist auch denkbar, dass die kühlergrillseitigen und/oder die kühlerseitigen Leitelemente fest an einem separaten Rahmen angeordnet sind, insbesondere sogar einstückig mit diesem ausgebildet sind. In diesem Fall ist der Rahmen am Kühlergrill bzw. am Kühler angeordnet.

Bei einer weiteren vorteilhaften Ausführungsform der erfindungsgemäßen Lösung gemäß der ersten Alternative sind die kühlergrillseitigen Leitelemente schwenkbar, insbesondere über ein Filmscharnier, am Kühlergrill angeordnet, wobei zusätzlich oder alternativ die kühlerseitigen Leitelemente schwenkbar, insbesondere über ein Filmscharnier am Kühler angeordnet sind. Dies ermöglicht eine besonders flache Ausführungsform sowohl der kühlergrillseitigen als auch der kühlerseitigen Leitelemente, wobei diese dann erst bei vollständig montiertem Kühler aufgeklappt werden und den Kühlkanal bzw. die Strömungsleiteinrichtung bildet. Auch eine derartige Ausführungsform ist kostengünstig realisierbar und einfach zu montieren.

Bei einer vorteilhaften Weiterbildung der erfindungsgemäßen Lösung gemäß der dritten Alternative ist zumindest am Kühlergrill und am Kühler jeweils eine Schiene mit Führungsnut, insbesondere eine Kederschiene, angeordnet, wobei das darin geführte Leitelement nach der Montage zusätzlich in die gegenüberliegende Schiene am gegenüberliegenden Kühler bzw. Kühlergrill eingefädelt wird. Hierdurch ist es möglich, die Strömungsleiteinrichtung beispielsweise zunächst lediglich in der Art von am Kühlergrill und am Kühler vorgesehenen Schienen, insbesondere Kederschienen, zu realisieren, in welche nach Abschluss der Montage des Kühlers ein entsprechendes Leitelement eingefädelt wird. Dieses Leitelement kann beispielsweise flexibel, insbesondere in der Art eines Vorhangs, oder aber auch fest in der Art von starren Leitelementen ausgebildet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: unterschiedliche Explosionsdarstellung einer erfindungsgemäßen Kühleranordnung in einem Nutzfahrzeug,
- Fig. 2: eine Schrägansicht von oben auf die gemäß der Fig. 1 dargestellte, jedoch montierte Kühleranordnung,
- Fig. 3: eine Darstellung wie in Fig. 1, jedoch mit unterschiedlicher Strömungsleiteinrichtung,
- Fig. 4: eine Darstellung wie in Fig. 2, jedoch bei montierter anderer Strömungsleiteinrichtung,
- Fig. 5: eine Ansicht von oben auf eine erfindungsgemäße Kühleranordnung mit schwenkbar angeordneten Leitelementen,
- Fig. 6: eine Darstellung wie in Fig. 5, jedoch mit einer als Faltenbalg ausgebildeten Strömungsleiteinrichtung,
- Fig. 7: eine Darstellung wie in Fig. 6, jedoch bei einer Strömungsleiteinrichtung mit Schienen und darin verfahrbarem Leitelement.

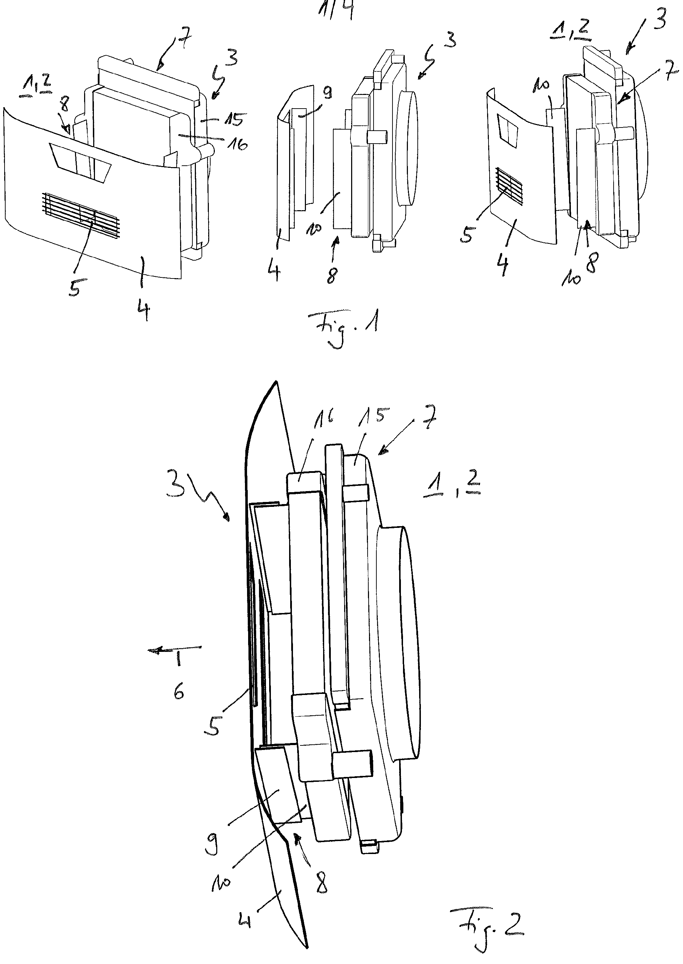

Entsprechend den Fig. 1 bis 7, weist ein erfindungsgemäß als Nutzfahrzeug 1 ausgebildetes Kraftfahrzeug 2 eine Kühleranordnung 3 auf, die einen Kühlergrill 4 mit einem Kühllufteinlass 5 sowie einen in Fahrtrichtung 6 gesehen hinter dem Kühllufteinlass 5 angeordneten Kühler 7 umfasst. Der Kühler 7 kann dabei sowohl einen Kühlmittelkühler 15, als beispielsweise auch einen Ladeluftkühler 16 umfassen. Ebenso umfasst das erfindungsgemäße Kraftfahrzeug 2 eine Strömungsleiteinrichtung 8, die einen Kühlluftstrom vom Kühllufteinlass 5 zum Kühler 7 leitet.

Erfindungsgemäß ist nun die Strömungsleiteinrichtung 8 gemäß dreier möglicher Alternativen ausgebildet.

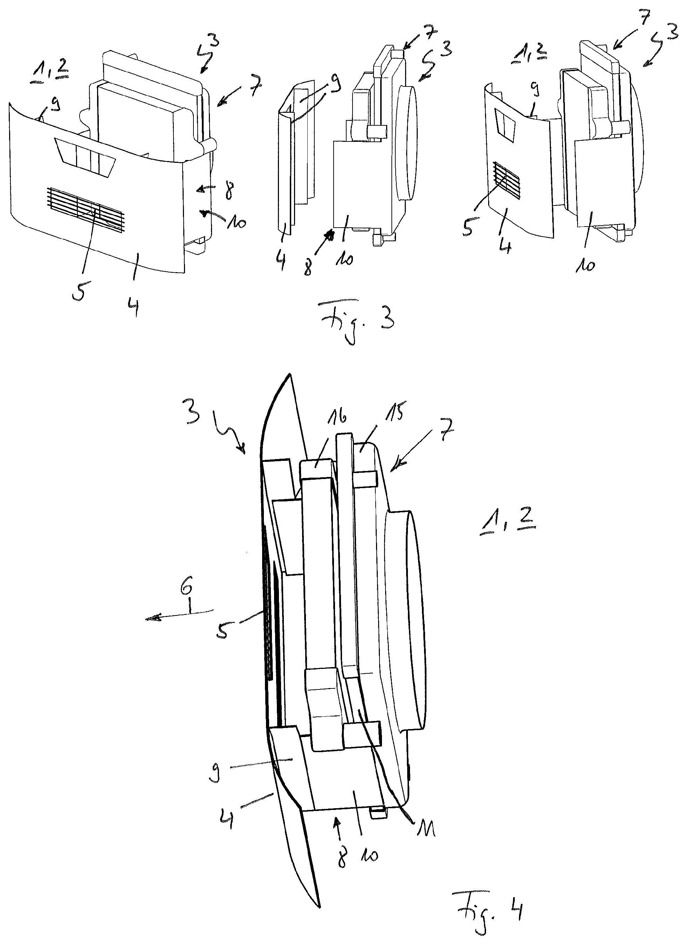

Die erste Alternative ist dabei gemäß den Fig. 1 bis 5 dargestellt und zeigt kühlergrillseitige Leitelemente 9 sowie kühlerseitige Leitelemente 10, die sich in montiertem Zustand (vgl. die Fig. 2 und 4) überlappen. Diese Leitelemente 9, 10 können dabei starr mit dem Kühlergrill 4 bzw. mit dem Kühler 7 verbunden sein, wobei unter dem Begriff "Kühler" sowohl ein Kühlmittelkühler als auch ein Ladeluftkühler verstanden werden kann.

Betrachtet man die kühlergrillseitigen Leitelemente 9 und die kühlerseitigen Leitelemente 10 gemäß der Ausführungsform in Fig. 1, so kann man erkennen, dass diese mit sich nach unten verjüngendem Abstand zueinander verlaufend, insbesondere V-förmig, angeordnet sind und dadurch gleichzeitig eine Führung zum Einschieben des Kühlers 7 von oben darstellen. Zudem berühren sich die kühlergrillseitigen Leitelemente 9 und die kühlerseitigen Leitelemente 10 flächig, wobei alternativ auch eine lediglich linienförmige Berührung denkbar ist.

Die kühlergrillseitigen Leitelemente 9 sind dabei fest am Kühlergrill 4 angeordnet, insbesondere sogar einstückig mit diesem ausgebildet und können dadurch vergleichsweise einfach und kostengünstig hergestellt werden. In gleicher Weise können auch die kühlerseitigen Leitelemente 10 fest am Kühler 7 angeordnet, insbesondere einstückig mit diesem ausgebildet sein. Rein theoretisch ist alternativ auch denkbar, dass die kühlergrillseitigen und/oder die kühlerseitigen Leitelemente 9, 10 fest an einem Rahmen 11 angeordnet, insbesondere sogar einstückig mit diesem ausgebildet sein können, wie dies beispielsweise in den Fig. 3 und 4 dargestellt ist.

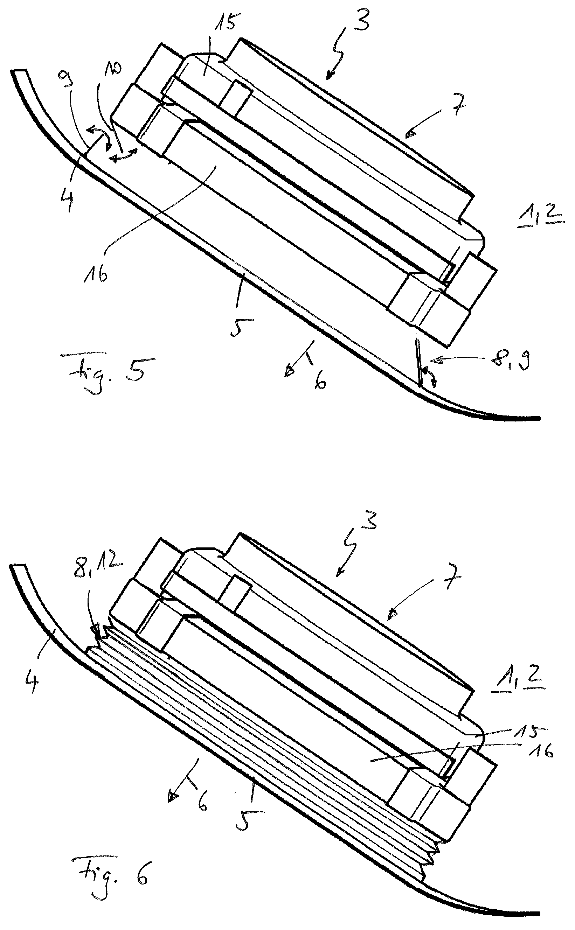

Betrachtet man die Strömungsleiteinrichtung 8 gemäß der Fig. 5, so kann man dort kühlergrillseitige und kühlerseitige Leitelemente 9, 10 erkennen, die schwenkbar, beispielsweise über ein Filmscharnier oder ein anderes Scharnier, am Kühlergrill 4 bzw. am Kühler 7 gelagert sind. Dabei ist auf der einen Seite eine Ausführungsform gezeigt, sowohl schwenkbare kühlergrillseitige Leitelemente 9 als auch schwenkbare kühlerseitige Leitelemente 10 aufweist, wogegen auf der rechten Seite eine Ausführungsform dargestellt ist, bei welcher ausschließlich schwenkbar am Kühlergrill 4 angeordnete kühlergrillseitige Leitelemente 10 vorgesehen sind. Alternativ ist selbstverständlich auch denkbar, dass lediglich ein kühlerseitiges Leitelement 10 vorgesehen ist, welches schwenkbar am Kühler 7 angeordnet ist und in montiertem Zustand eine Strömungswand zwischen dem Kühler 7 und dem Kühlergrill 4 bildet.

Betrachtet man die hierzu wiederum alternative Ausführungsform gemäß der Fig. 6, so kann man bei dieser einen Faltenbalg 12 erkennen, der rein theoretisch auch als elastischer Rahmen ausgebildet sein kann, und der bei montiertem Kühler 7 ausgezogen und dann beispielsweise am Kühlergrill 4 befestigt wird, sofern der Faltenbalg 12 ursprünglich am Kühler 7 angeordnet ist. Alternativ hierzu ist selbstverständlich auch vorstellbar, dass der Faltenbalg 12 am Kühlergrill 4 angeordnet ist und nach der Montage des Kühlers 7 in Richtung des Kühlers 7 ausgezogen und an diesem befestigt wird.

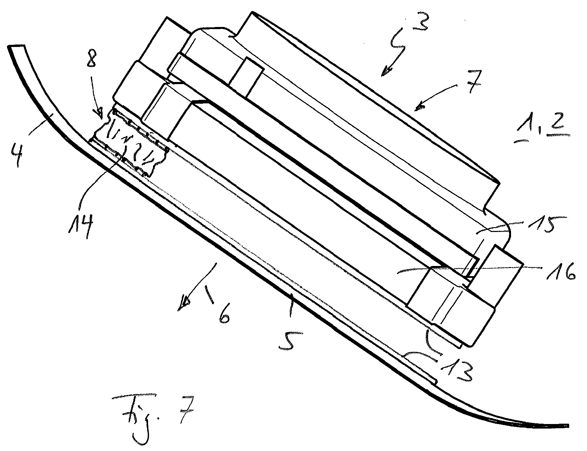

Die Fig. 7 zeigt wiederum eine alternative Ausführungsform der erfindungsgemäßen Strömungsleiteinrichtung 8, bei welchem sowohl am Kühler 7 als auch am Kühlergrill 4 jeweils eine Schiene 13, insbesondere eine Kederschiene, angeordnet ist, in welchen ein Leitelement 14 geführt wird. Die1ses Leitelement 14 kann dabei in der Art eines Vorhanges ausgebildet sein oder aber starr, so dass beispielsweise für jeweils eine Seite ein starres Leitelement 14 vorgesehen ist. Rein theoretisch ist es auch denkbar, ein derartiges Leitelement 14 in der Art eines Rolltores auszubilden, welches dann bei montiertem Kühler 7 entlang der Kederschienen bzw. generell entlang der Schienen 13 eingefädelt wird.

Sämtlichen gezeigten Ausführungsformen ist dabei gemein, dass ohne zusätzlichen Montageaufwand eine erheblich verbesserte Luftführung durch die Strömungsleiteinrichtung 8 erreicht werden kann. Werden die Leitelemente 9, 10 zudem als Führung ausgeführt, kann dadurch auch die Montage vereinfacht werden. Die Verbesserung der Luftführung wirkt sich positiv auf die maximal abführbare Wärmemenge aus und verschiebt die Lüfterzuschaltung in Richtung höherer Last. Dadurch kann eine nennenswerte Kraftstoffeinsparung erzielt werden. Der Teil der Luftführung, der Bestandteil des Kühlers 7 ist, kann als Produkt zusammen mit diesem mitverkauft oder separat als Nachrüstteil angeboten werden.

## Patentansprüche

1. Kraftfahrzeug (2) mit einer Kühleranordnung (3), die einen Kühlergrill (4) mit einem Kühllufteinlass (5) und einen in Fahrtrichtung (6) gesehen hinter dem Kühllufteinlass (5) angeordneten Kühler (7) aufweist sowie eine Strömungsleiteinrichtung (8), die einen Kühlluftstrom vom Kühllufteinlass (5) zum Kühler (7) leitet, **dadurch gekennzeichnet,**
- **dass** das Kraftfahrzeug (2) als Nutzfahrzeug (1) ausgebildet ist,
- **dass** die Strömungsleiteinrichtung (8)
- kühlergrillseitige Leitelemente (9) und kühlerseitige Leitelemente (10) aufweist, die sich in montiertem Zustand überlappen, oder
- einen kühlergrillseitig oder kühlerseitig angeordneten Faltenbalg (12) oder elastischen Rahmen aufweist, welcher bei montiertem Kühler (7) ausgezogen und am gegenüberliegenden Kühler (7) oder am Kühlergrill (4) fixiert ist, oder
- zumindest eine Schiene (13) mit Führungsnut, insbesondere eine Kederschiene, und zumindest ein darin geführtes Leitelement (14) aufweist.

2. Kraftfahrzeug nach Anspruch 1, erste Alternative,
**dadurch gekennzeichnet,**
**dass** die kühlergrillseitigen Leitelemente (9) und kühlerseitigen Leitelemente (10) V-förmig angeordnet sind und dadurch gleichzeitig eine Führung zum Einschieben des Kühlers (7) bilden.

3. Kraftfahrzeug nach Anspruch 1, erste Alternative oder nach Anspruch 2,
**dadurch gekennzeichnet,**
**dass** sich die kühlergrillseitigen Leitelemente (9) und kühlerseitigen Leitelemente (10) zumindest linienförmig, vorzugsweise sogar flächig berühren.

4. Kraftfahrzeug nach einem der Ansprüche 1, erste Alternative, oder Anspruch 2 oder 3,
**dadurch gekennzeichnet,**
- **dass** die kühlergrillseitigen Leitelemente (9) fest am Kühlergrill (4) angeordnet, insbesondere sogar einstückig mit diesem ausgebildet sind, und/oder
- **dass** die kühlerseitigen Leitelemente (10) fest am Kühler (7) angeordnet, insbesondere sogar einstückig mit diesem ausgebildet sind.

5. Kraftfahrzeug nach einem der Ansprüche 1, erste Alternative, oder Anspruch 2 oder 3,
**dadurch gekennzeichnet,**
**dass** die kühlergrillseitigen und/oder die kühlerseitigen Leitelemente (9,10) fest an einem Rahmen (11) angeordnet, insbesondere sogar einstückig mit diesem ausgebildet sind.

6. Kraftfahrzeug nach einem der Ansprüche 1, erste Alternative oder Anspruch 2 oder 3,
**dadurch gekennzeichnet,**
- **dass** die kühlergrillseitigen Leitelemente (9) schwenkbar, insbesondere über ein Filmscharnier, am Kühlergrill (4) angeordnet sind, und/oder
- **dass** die kühlerseitigen Leitelemente (10) schwenkbar, insbesondere über ein Filmscharnier, am Kühler (7) angeordnet sind.

7. Kraftfahrzeug nach Anspruch 1, dritte Alternative,
**dadurch gekennzeichnet**,
am Kühlergrill (4) und am Kühler (7) jeweils zumindest eine Kederschiene (13) angeordnet ist, wobei das darin geführte Leitelement (14) nach der Montage zusätzlich in der gegenüberliegende Kederschiene (13) eingefädelt ist.

8. Kraftfahrzeug nach Anspruch 7,
**dadurch gekennzeichnet,**
**dass** das Leitelement (14) flexibel, insbesondere tuchartig, oder fest ausgebildet ist.
